# EUROPÄISCHE PATENTSCHRIFT

(11) **EP 1 010 649 B1**
(45) Veröffentlichungstag und Bekanntmachung des Hinweises auf die Patenterteilung: **19.02.2003**
(21) Anmeldenummer: 99124776.8
(22) Anmeldetag: 14.12.1999
(51) Int. Cl.: B65G 47/50, B65G 1/137

(54) **Verfahren zum Betrieb einer Transportvorrichtung und Transportvorrichtung hierzu**
Transporting device operation method and corresponding transporting device
Procédé de fonctionnement d'un dispositif de transport et dispositif de transport correspondant

(30) Priorität: 16.12.1998 DE 19858158
(43) Veröffentlichungstag der Anmeldung: 21.06.2000
(73) Patentinhaber: Panitzek, Holger, 70437 Stuttgart (DE)
(72) Erfinder: Panitzek, Holger, 70437 Stuttgart (DE)
(74) Vertreter: Held, Thomas, Dr.

(56) Entgegenhaltungen:
- DE-A- 3 042 903
- US-A- 5 038 283
- US-A- 5 473 545

## Beschreibung

Die Erfindung betrifft ein Verfahren zum Betrieb einer Transportvorrichtung mit den Merkmalen des Oberbegriffs des Anspruches 1 und eine Transportvorrichtung mit den Merkmalen des Oberbegriffs des Anspruches 4.

Ein bekanntes Verfahren dieser Art mit einer bekannten Transportvorrichtung dieser Art wird angewandt, um Waren in der Automobilindustrie, insbesondere Ersatzteile und Zubehörteile, von verschiedenen Entnahmestellen eines Warenlagers aus zu verschiedenen Warenausgabestellen als Ziele zu befördern. Der Einsatz von Transportbehältern erleichtert den Transport mehrerer Waren mit gleichem Ziel, da normierte Einheiten im System zur Verfügung stehen. Zugleich erhöht sich aber die Komplexität der Zielzuordnung, da eine Verknüpfung zwischen den Transportbehältern und dem Ziel der Waren geschaffen werden muß. Wenn diese Verknüpfung der Transportvorrichtung bekannt ist, können die Transportbehälter mit automatischer Weichenstellung in der Transportvorrichtung zu ihrem Ziel transportiert werden. Zur Schaffung der Verknüpfung wird die Ware entweder an einer Lesestation aus dem Transportbehälter manuell genommen, erkannt und wieder zurückgelegt, oder an den Entnahmestellen des Warenlagers vor dem manuellen Einbringen in den Transportbehälter erkannt. Im ersten Fall ist ein spezieller Arbeitsschritt notwendig, der arbeitsintensiv ist und Zeit kostet, im zweiten Fall müssen Leseeinrichtungen in größerer Zahl vorhandenen sein. Als Leseeinrichtungen werden üblicherweise Handscanner eingesetzt. Von Mitarbeitern des Betreibers vornehmende Handgriffe führen zudem zu einer höheren Fehleranfälligkeit.

Eine Transportvorrichtung dieser Art, bei welcher die Verknüpfung von Transportbehältern und den darin enthaltenen Waren durch Bedienpersonal erfolgt, welches einen manuell positionierbaren Handscanner einsetzt, ist aus der US 5,038,283 bekannt.

Der Erfindung liegt die Aufgabe zugrunde, ein Verfahren der eingangs genannten Art und eine Transportvorrichtung der eingangs genannten Art zu verbessern. Diese Aufgabe wird erfindungsgemäß durch ein Verfahren mit den Merkmalen des Anspruches 1 bzw. durch eine Transportvorrichtung mit den Merkmalen des Anspruches 4 gelöst. Vorteilhafte Ausgestaltungen sind Gegenstand der Unteransprüche.

Da die Waren zur Erkennung einem Lesevorgang unterzogen werden, nachdem sie bereits in die Transportbehälter eingebracht worden sind, müssen die Waren erst wieder bei Erreichen ihres Zieles aus dem Transportbehälter genommen werden. Dadurch entfällt ein Arbeitsschritt, bei dem die Waren erst an eine Leseeinrichtung gehalten und dann wieder in den Transportbehälter gelegt werden müssen. Außerdem ist sichergestellt, daß die Zuordnung zwischen Transportbehälter und Ware vor Erreichen des Zieles nicht mehr versehentlich verändert wird, beispielsweise wenn die Waren nach einem außerhalb des Transportbehälters durchgeführten Lese- und Erkennungsvorgang in einen falschen Transportbehälter gelangen.

Durch die automatische, also rein maschinelle Durchführung des Lesevorgangs, bei welcher die Leseeinrichtung und die Waren für den Lesevorgang nicht manuell, sondern automatisch in die Leseposition gebracht werden, kann dem Transportbehälter das Ziel vollautomatisch zugeordnet werden. Die Fehleranfälligkeit ist dadurch wesentlich geringer als bei manuell durchgeführten Lesevorgängen.

Sofern durch den Lesevorgang die Waren in bestimmten Transportbehältern nicht erkannt werden, so werden diese Transportbehälter auf eine Nebenstrecke der Transportvorrichtung geleitet, um wo beispielsweise die Position der Waren innerhalb der Transportbehälter verändert wird oder die Waren aus einer anderen Blickrichtung einem weiteren Lesevorgang unterzogen werden.

Bei der erfindungsgemäßen Transportvorrichtung werden Transportbehälter eingesetzt, um Kleinteile zu befördern, die ohne Transportbehälter von der Transportvorrichtung fallen und verloren gehen könnten. Für etwas größere Teile können auch plattenartige Transportmittel eingesetzt werden. Durch die ortsfeste Anordnung der Leseeinrichtung an einer (oder aus Sicherheitsgründen mehreren) zentralen Lesestation ist sichergestellt, daß alle Transportbehälter die Leseeinrichtung(en) passieren. Gleichzeitig muß aber nicht das gesamte Warenlager mit vielen Leseeinrichtungen ausgestattet werden. Die Lesestation mit der Leseeinrichtung wirkt als Verknüpfungsstation zur Verknüpfung des Objektes (Transportbehälter) mit seinem Ziel. Dadurch, daß die Leseeinrichtung durch eine Öffnung des Transportbehälters die im Inneren des Transportbehälters vorhandenen Waren dem Lesevorgang unterzieht, entfallen Vorrichtungen zur Entnahme der Ware und zum Zurücklegen. Die Kosten, insbesondere die laufenden Kosten, der Transportvorrichtung werden durch diese Maßnahmen verringert.

Vorzugsweise sind die Transportbehälter nach oben offen, und die Leseeinrichtung ist von oben her auf die Transportbehälter ausgerichtet. Aufwendige Deckelkonstruktionen für die Transportbehälter zur Sicherung der Waren entfallen. Es ist aber auch möglich, an der Lesestation ein durchsichtiges Gegenstück auf den Transportbehälter aufzusetzen und den Transportbehälter relativ zur Leseeinrichtung zu verdrehen, beispielsweise seine Unterseite nach oben. So können auch nicht erkannte Waren einem weiteren Lesevorgang unterzogen werden.

In einer bevorzugten Ausführungsform weisen die Transportbehälter durchsichtige und/oder durchlässige Wandteile auf, wobei eine Leseeinrichtung auf die durchsichtigen und/oder durchlässigen Wandteile der Transportbehälter ausrichtbar ist. Dadurch können ebenfalls nicht erkannte Waren einem weiteren Lesevorgang unterzogen werden, beispielsweise durch Positionsveränderung der Leseeinrichtung oder durch eine weitere Leseeinrichtung.

Vorzugsweise tragen die Waren spezielle Warenmarken, insbesondere sogenannte Barcodes, die dann von der Leseeinrichtung erkannt werden. Es ist aber auch möglich, die Erkennung über charakteristische Formen der Waren durchzuführen. Für die Erkennung von Barcodes ist der Einsatz eines Hochleistungs-Scanners von Vorteil.

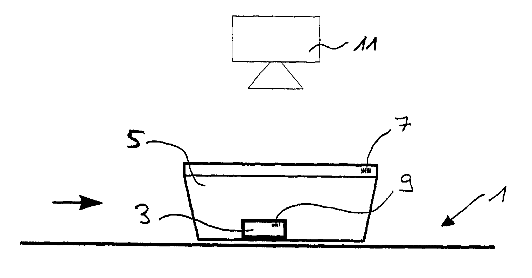

Im folgenden ist die Erfindung anhand eines in der Zeichnung dargestellten Ausführungsbeispiels näher erläutert. Es zeigt die einzige Figur
eine schematische Seitenansicht des Ausführungsbeispiels im Bereich der zentralen Lesestation.

Mittels einer als Ganzes mit 1 bezeichneten Transportvorrichtung werden Waren 3 aus einem Warenlager zu einer Warenauslieferung mit mehreren Abgabestellen befördert. Im Ausführungsbeispiel handelt es sich bei den Waren 3 um Ersatzteile für Automobile. Die Waren 3 weisen eine Abmessung bis zu maximal etwa einem halben Meter auf. Die Waren 3 können auch in Packungen von entsprechenden Abmessungen zusammengefaßt sein.

Die Waren 3 werden im Warenlager zunächst in einen Transportbehälter 5 eingebracht, und zwar von Hand oder maschinell mittels einer gesonderten Fördervorrichtung. Der Transportbehälter 5 wird durch die Transportvorrichtung 1 bewegt. Im Ausführungsbeispiel ist der Transportbehälter 5 als ein nach oben offener Kasten aus Kunststoff ausgebildet. Der Transportbehälter 5 trägt auf seiner Außenseite, vorzugsweise im Bereich der oberen Kante, eine Behältermarke 7, welche den Transportbehälter 5 innerhalb der Transportvorrichtung 1 eindeutig kennzeichnet. Die Waren 3 erhalten beim Einbringen in den kommissionierten Transportbehälter 7 eine Warenmarke 9, welche als Ziel die Ausgabestelle in der Warenauslieferung eindeutig kennzeichnet. Alle Waren 3 innerhalb eines Transportbehälters 5 haben das gleiche Ziel. Die Ausgabe der Warenmarke 9 wird von einer Rechenanlage überwacht.

Beim Verlassen des Warenlagers wird durch eine Leseeinrichtung die Behältermarke 7, vorzugsweise ein Barcode, erfaßt, worauf die Rechenanlage den Transportbehälter 5 identifiziert. Alle Transportbehälter 5 mit den darin enthaltenen Waren 3 werden nun durch die Transportvorrichtung 1, beispielsweise mittels Förderbänder, zu einer zentralen Lesestation befördert. Die Transportrichtung ist in der Zeichnung durch einen Pfeil angedeutet. An der Lesestation ist oberhalb des Förderbandes der Transportvorrichtung 1 eine weitere Leseeinrichtung 11 ortsfest angeordnet, welche die Öffnung des Transportbehälters 5 von oben her vollständig erfaßt. Im Ausführungsbeispiel weist die Leseeinrichtung 11 einen Hochleistungs-Scanner auf, dessen variable Optik den Transportbehälter 5 sowohl in der Fläche als auch in der Tiefe durchscannen kann. Vorzugsweise erfolgt das Scannen oder Lesen über Rasterungen unterschiedlicher Auflösung, wechselnd zwischen grob und fein.

Die Warenmarken 9 enthalten vorzugsweise ebenfalls einen Barcode, auf den die Leseeinrichtung 11 anspricht. Sobald die Leseeinrichtung 11 bei dem Lesevorgang von oben her eine Ware 3 mit einer nach oben weisenden Warenmarke 9 (oder zwei oder mehr sich ergänzende Teile von Warenmarken 9 auf verschiedenen Waren 3) gefunden hat, identifiziert die Rechenanlage, an welche auch die Leseeinrichtung 11 angeschlossen ist, das Ziel der Ware 3. Zusätzlich wird auf die oben beschriebene Weise der Transportbehälter 5 über seine Behältermarke 7 identifiziert. Dadurch wird eine Verknüpfung zwischen dem Transportbehälter 5 und dem Ziel der Ware 3 geschaffen.

Der Transportbehälter 5 wird nun durch die Transportvorrichtung 1 über mehrere Weichen hinweg zu derjenigen Abgabestelle befördert, welche das Ziel der Ware 3 ist. Hierzu ist vor jeder Weiche eine Leseeinrichtung angeordnet, welche die Behältermarke 7 erkennt, worauf die Rechenanlage über die in Rede stehende Verknüpfung die Weiche in Richtung des Zieles der Ware 3 schaltet, bis der Transportbehälter 5 schließlich dort angekommen ist.

Sollte an der zentralen Lesestation die Leseeinrichtung 11 keine Warenmarke 9 erkennen, weil diese beispielsweise auf der nach unten weisenden Seite der Ware 3 angebracht ist, wird der Transportbehälter 5 hinter der Lesestation über eine Weiche von der Hauptstrekke der Transportvorrichtung 1 heraus auf eine Nebenstrecke geleitet. Je nach Ausbildung der Transportvorrichtung 1 kann nun auf der Nebenstrecke eine Rüttelstrecke oder eine Wendevorrichtung vorgesehen sein, welche die Position der Waren 3 innerhalb der Transportbehälter 5 verändern, vorzugsweise die Seite der Ware 3 mit der Warenmarke 9 nach oben drehen, worauf der Transportbehälter 5 erneut zur zentralen Lesestation geleitet wird. Alternativ oder nach einer weiteren Fehlerkennung führt die Nebenstrecke zu einer Kontrollstelle, um die Verknüpfung zwischen Transportbehälter 5 und Ziel der Ware 3 herzustellen.

In einer bevorzugten Abwandlung besteht der Transportbehälter 5 aus zumindest teilweise durchsichtigem oder durchbrochenem Material, so daß durch eine an der Nebenstrecke angeordnete, den Transportbehälter 5 von unten und/oder von der Seite erfassende Leseeinrichtung die Warenmarke 9 erkannt wird.

## Patentansprüche

1. Verfahren zum Betrieb einer Transportvorrichtung (1), die Transportbehälter (5) mit darin eingebrachten Waren (3) zu verschiedenen Zielen befördert, wobei durch eine Leseeinrichtung (11) die Waren (3) zur deren Erkennung einem Lesevorgang unterzogen werden, nachdem sie bereits in die Transportbehälter (5) eingebracht worden sind, **dadurch gekennzeichnet, daß** der Lesevorgang automatisch durchgeführt und dem Transportbehälter (5) das Ziel vollautomatisch zugeordnet wird, wobei die Transportbehälter (5), welche die durch den Lesevorgang nicht erkannten Waren (3) enthalten, auf eine Nebenstrecke der Transportvorrichtung (1) geleitet werden.

2. Verfahren nach Anspruch 1, **dadurch gekennzeichnet, daß** in den Transportbehältern (5), welche die durch den Lesevorgang nicht erkannten Waren (3) enthalten, die Position der Waren (3) innerhalb der Transportbehälter (5) verändert wird.

3. Verfahren nach Anspruch 2, **dadurch gekennzeichnet, daß** die durch den Lesevorgang nicht erkannten Waren (3) aus einer anderen Blickrichtung einem weiteren Lesevorgang unterzogen werden.

4. Transportvorrichtung, insbesondere zur Durchführung des Verfahren nach einem der Ansprüche 1 bis 3, mit Transportbehältern (5) zur Beförderung von Waren (3) und wenigstens einer Leseeinrichtung (11), um die im Inneren des Transportbehälters (5) vorhandenen Waren (3) einem Lesevorgang zu unterziehen, **dadurch gekennzeichnet, daß** die Leseeinrichtung (11) an einer zentralen Lesestation ortsfest angeordnet ist und für eine vollautomatische Verknüpfung zwischen dem Transportbehälter (5) und seinem Ziel die Waren (3) durch eine Öffnung im Transportbehälter (5) dem Lesevorgang automatisch unterzieht, wobei die Transportvorrichtung (1) eine Nebenstrecke für die Transportbehälter (5) aufweist, welche die durch den Lesevorgang nicht erkannten Waren (3) enthalten.

5. Transportvorrichtung nach Anspruch 4, **dadurch gekennzeichnet, daß** die Transportbehälter (5) nach oben offen sind und die Leseeinrichtung (11) von oben her auf die Transportbehälter (5) ausgerichtet ist.

6. Transportvorrichtung nach Anspruch 4 oder 5, **dadurch gekennzeichnet, daß** die Transportbehälter (5) durchsichtige und/oder durchlässige Wandteile aufweisen und die Leseeinrichtung (11) auf die durchsichtigen und/oder durchlässigen Wandteile der Transportbehälter (5) ausgerichtet ist.

7. Transportvorrichtung nach einem der Ansprüche 4 bis 6, **dadurch gekennzeichnet, daß** die Leseeinrichtung (11) auf den Waren (3) angebrachte Warenmarken (9), insbesondere Barcodes, erkennt.

8. Transportvorrichtung nach einem der Ansprüche 4 bis 7, **gekennzeichnet durch** einen Hochleistungs-Scanner als Leseeinrichtung (11).

## Claims

1. Method for operating a transport device (1) which conveys transport containers (5) having goods (3) contained therein to different destinations, the goods (3) being subjected to a reading operation by a reading device (11) for the recognition thereof after they have already been introduced into the transport containers (5), **characterised in that** the reading operation is automatically carried out and the destination is assigned to the transport container (5) completely automatically, the transport containers (5) which contain the goods (3) not recognised by the reading operation being directed onto a secondary path of the transport device (1).

2. Method according to claim 1, **characterised in that**, in the transport containers (5) which contain the goods (3) not recognised by the reading operation, the position of the goods (3) within the transport containers (5) is changed.

3. Method according to claim 2, **characterised in that** the goods (3) not recognised by the reading operation are subjected to another reading operation from a different viewing direction.

4. Transport device, in particular for carrying out the method according to any one of claims 1 to 3, having transport containers (5) for conveying goods (3) and at least one reading device (11) in order to subject the goods (3) located inside the transport container (5) to a reading operation, **characterised in that** the reading device (11) is arranged in a stationary manner at a central reading station and subjects the goods (3) automatically to the reading operation through an opening in the transport container (5) for a completely automatic association between the transport container (5) and the destination thereof, the transport device (1) having a secondary path for the transport containers (5) which contain the goods (3) not recognised by the reading operation.

5. Transport device according to claim 4, **characterised in that** the transport containers (5) are open towards the top and the reading device (11) is aligned towards the transport containers (5) from above.

6. Transport device according to claim 4 or 5, **characterised in that** the transport containers (5) have transparent and/or translucent wall portions and the reading device (11) is aligned towards the transparent and/or translucent wall portions of the transport containers (5).

7. Transport device according to any one of claims 4 to 6, **characterised in that** the reading device (11) recognises goods markings (9), in particular bar codes, which are provided on the goods (3).

8. Transport device according to any one of claims 4 to 7, **characterised by** a high-performance scanner as the reading device (11).

## Revendications

1. Procédé pour actionner un dispositif de transport (1) qui transporte des récipients de transport (5) avec des marchandises (3) qui y sont contenues vers différentes destinations, dans lequel, pour leur identification, les marchandises (3) sont soumises à une opération de lecture par un dispositif de lecture (11), après qu'elles aient déjà été introduites dans les récipients de transport (5), **caractérisé par le fait que** l'opération de lecture est exécutée automatiquement et que la destination est entièrement automatiquement assignée au récipient de transport (5), les récipients de transport qui contiennent les marchandises (3) qui n'ont pas été identifiées par l'opération de lecture étant dirigées sur une voie secondaire du dispositif de transport (1).

2. Procédé selon la revendication 1, **caractérisé par le fait que**, dans les récipients de transport (5) qui contiennent les marchandises (3) non identifiées par l'opération de lecture, la position des marchandises (3) est modifiée à l'intérieur des récipients de transport (5).

3. Procédé selon la revendication 2, **caractérisé par le fait que** les marchandises (3) qui n'ont pas été identifiées par l'opération de lecture sont soumises à une opération de lecture additionnelle effectuée dans une autre direction de visée.

4. Dispositif de transport, en particulier pour la mise en oeuvre du procédé selon l'une des revendications 1 à 3, comprenant des récipients de transport (5) destinés à transporter des marchandises (3) et au moins un dispositif de lecture (11) pour soumettre les marchandises (3) présentes à l'intérieur du récipient de transport (5) à une opération de lecture, **caractérisé par le fait que** le dispositif de lecture (11) est disposé en position fixe dans une station de lecture centrale et, pour effectuer une combinaison entièrement automatique entre le récipient de transport (5) et sa destination, les marchandises (3) sont soumises automatiquement à l'opération de lecture à travers une ouverture ménagée dans le récipient de transport (5), le dispositif de transport (1) présentant une voie secondaire pour les récipients de transport (5) qui contiennent des marchandises (3) qui n'ont pas été identifiées par l'opération de lecture.

5. Dispositif de transport selon la revendication 4, **caractérisé par le fait que** les récipients de transport (5) sont ouverts vers le haut et le dispositif de lecture (11) est orienté de haut en bas sur les récipients de transport (5).

6. Dispositif de transport selon la revendication 4 ou 5, **caractérisé par le fait que** les récipients de transport (5) présentent des parties de parois translucides et/ou transparentes et le dispositif de lecture (11) est orienté vers les parties de parois transparentes et/ou translucides des récipients de transport (5).

7. Dispositif de transport selon l'une des revendications 4 à 6, **caractérisé par le fait que** le dispositif de lecture (11) identifie des marquages de marchandises (9), en particulier des codes à barres appliqués sur les marchandises (3).

8. Dispositif de transport selon l'une des revendications 4 à 7, **caractérisé par** un scanner de grande puissance servant de dispositif de lecture (11).
